(19)

Europäisches
Patentamt
European
Patent Office
Office européen
des brevets

(11) **EP 4 389 787 A2**

(12) **EUROPEAN PATENT APPLICATION**

(43) Date of publication:
**26.06.2024 Bulletin 2024/26**

(21) Application number: **23215935.0**

(22) Date of filing: **12.12.2023**

(51) International Patent Classification (IPC):
**C08F 210/16** (2006.01)  **B32B 27/32** (2006.01)
**C08L 23/08** (2006.01)

(52) Cooperative Patent Classification (CPC):
(C-Sets available)
**C08F 210/16; B32B 27/32**                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 KR 20220183084**

(71) Applicant: **Hanwha TotalEnergies Petrochemical
Co., Ltd.**
**Seosan-si, Chungcheongnam-do 31900 (KR)**

(72) Inventors:
• **JANG, Hee Jung**
  **31900 Seosan-si (KR)**
• **HAN, Jae Hyuck**
  **31900 Seosan-si (KR)**
• **PARK, Ji Yong**
  **31900 Seosan-si (KR)**

(74) Representative: **Meroni, Francesca et al**
**Jacobacci & Partners S.p.A.**
**Via Senato, 8**
**20121 Milano (IT)**

(54) **POLYETHYLENE RESIN AND ARTICLE INCLUDING THE SAME**

(57)    Embodiment of the present disclosure provides a polyethylene resin in which, with respect to a total integrated area of a total molecular weight distribution graph of the polyethylene resin measured by gel permeation chromatography - infrared, an integrated area of the graph corresponding to a polymer having a molecular weight of $10^5$ g/mol to $10^6$ g/mol is 18% to 28%, wherein the number of short chain branches per 1000 carbons of the polymer is 5 or greater and less than 15, an integrated area of the graph corresponding to a polymer having a molecular weight (M) of $10^3$ g/mol to $10^4$ g/mol is 20% to 30%, wherein the number of short chain branches per 1000 carbons of the polymer is 1 or greater and less than 8, and the molecular weight is a molecular weight of a polymer passing through a column in the gel permeation chromatography - infrared.

**(Cont. next page)**

EP 4 389 787 A2

(52) Cooperative Patent Classification (CPC): (Cont.)

C-Sets
**C08F 210/16, C08F 2/001;**
**C08F 210/16, C08F 4/52;**
C08F 210/16, C08F 210/14, C08F 2500/12,
C08F 2500/34, C08F 2500/33, C08F 2500/37,
C08F 2500/26, C08F 2500/10;
C08L 23/0815, C08L 23/0815

**Description**

BACKGROUND

1. Field

Embodiments of the present disclosure relate to a polyethylene resin, a method for preparing the same, and a molded article including the same.

2. Description of the Related Art

The recent tightening of regulations on recycling worldwide and changes in perceptions on company-specific social responsibility for sustainability and solutions for addressing broader environmental issues contribute to the demand for design plans suitable for collecting, sorting, and recycling flexible packaging materials. The most effective solution for the demand is using packaging materials to which a single material is applied (in particular, packaging materials to which a single material such as polyethylene (PE) or polypropylene (PP) is applied) instead of packaging materials to which a mixture of different typical materials is applied, and this serves to allow easier recycling and to improve quality of recycled products.

However, polyethylene films, which are generally manufactured through a process of blowing or casting, have been doubted to simply replace base films, such as typical polyethylene terephthalate (PET) films or polyamide (PA) films using a single material, due to slightly reduced mechanical properties.

This is why biaxially oriented polyethylene (BOPE) films are proposed to be applied. In the process of manufacturing the biaxially oriented polyethylene (BOPE) films, when the films are stretched in a machine direction (MD) and a transverse direction (TD), a polyethylene chain and a crystal structure are highly oriented, resulting in greater mechanical strength, especially improved impact strength, and remarkably improved optical properties such as transparency and film appearance.

Methods for manufacturing biaxially stretched films include a tenter-frame process and a tubular stretching method. The tenter-frame process has been used to process common biaxially stretched films such as polypropylene (PP), polyethylene terephthalate (PET), and polyamide (PA). Compared to the tubular stretching method, the tenter-frame process provides benefits such as higher elongation, faster forming speed, and greater production efficiency, and the manufactured biaxially stretched films are also provided as films having satisfactory thickness uniformity and excellent mechanical and optical properties. However, in the case of the tenter-frame process, film processing is greatly affected by the molecular structure of raw materials, and stretching process conditions are very strict. In particular, typical polyethylene (PE) has a fast crystallization rate and high crystallinity, and thus has a limited temperature range for stretching and very low elongation, forms wrinkles during stretching, or comes into film breakage during stretching when the thickness is uneven.

Therefore, there is a need to develop raw materials for polyethylene resins suitable for the tenter-frame process to manufacture BOPE films having high elongation.

SUMMARY

An embodiment of the present disclosure provides a polyethylene resin having high biaxial elongation upon stretching through a tenter-frame process, having excellent processability upon stretching, and having a wide temperature range for stretching.

Another embodiment of the present disclosure provides a method for preparing the polyethylene resin.

Another embodiment of the present disclosure provides a molded article including the polyethylene resin.

An embodiment of the present disclosure provides a polyethylene resin in which, with respect to a total integrated area of a total molecular weight (M) distribution graph of the polyethylene resin measured by gel permeation chromatography - infrared, an integrated area of the graph corresponding to a polymer having a molecular weight (M) of $10^5$ g/mol to $10^6$ g/mol is 18% to 28%, wherein the number of short chain branches per 1000 carbons of the polymer is 5 or greater and less than 15; an integrated area of the graph corresponding to a polymer having a molecular weight (M) of $10^3$ g/mol to $10^4$ g/mol is 20% to 30%, wherein the number of short chain branches per 1000 carbons of the polymer is 1 or greater and less than 8; and the molecular weight (M) is a molecular weight of a polymer passing through a column in the gel permeation chromatography - infrared.

The short chain branch may have a broad orthogonal comonomer distribution (BOCD) structure.

In the polyethylene resin, a fraction eluting at a temperature of 70 °C to 80 °C may be 10% or greater and less than 20%, and a fraction eluting at a temperature of 80 °C to 90 °C may be 50% or greater and less than 70% from the results of crystallization analysis fractionation.

The polyethylene resin may have a density of 0.945 g/cm$^3$ to 0.970 g/cm$^3$.

The polyethylene resin may have a melt index MI$_{2.16kg}$ (a load of 2.16 kg, 190 °C) of 0.40 g/10 min to 3.0 g/10 min.

The polyethylene resin may have a melt flow rate ratio (MI$_{21.6kg}$ (a load of 21.6 kg, 190 °C)/MI$_{2.16kg}$ (a load of 2.16 kg, 190 °C)) of 70 to 90.

Another embodiment of the present disclosure provides a method for preparing a polyethylene resin includes injecting a monomer, a catalyst, and a C5 to C20 olefin comonomer into a first reactor; injecting the comonomer into the first reactor at a ratio of 60 g/kg to 100 g/kg relative to ethylene; injecting hydrogen into the first reactor; and injecting a polymer polymerized in the first reactor into a second reactor.

Another embodiment of the present disclosure provides a molded article including the polyethylene resin.

The molded article may be a film sequentially biaxially stretched to have a machine direction (MD) elongation of 4 to 6 times and a transverse direction (TD) elongation of 8 to 10 times through a tenter-frame process.

BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

FIG. 1 is a graph showing a total molecular weight distribution of Examples 1 and 2 and Comparative Examples 1 and 2 measured by gel permeation chromatography - infrared (GPC-IR), and a graph showing the number of short chain branches per 1000 carbons in Examples 1 and 2 and Comparative Examples 1 and 2;

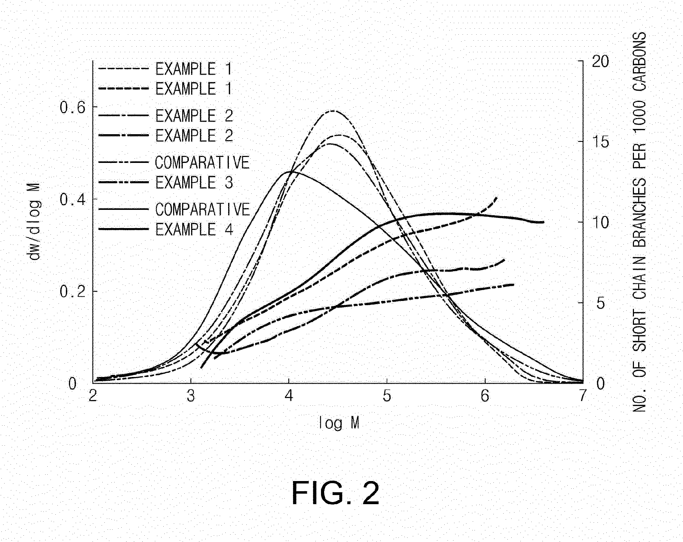

FIG. 2 is a graph showing a total molecular weight distribution of Examples 1 and 2 and Comparative Examples 3 and 4 measured by gel permeation chromatography - infrared (GPC-IR), and a graph showing the number of short chain branches per 1000 carbons in Examples 1 and 2 and Comparative Examples 3 and 4;

FIG. 3 is a crystallization analysis fractionation (CRYSTAF) graph of Examples 1 and 2 and Comparative Examples 1 and 2; and

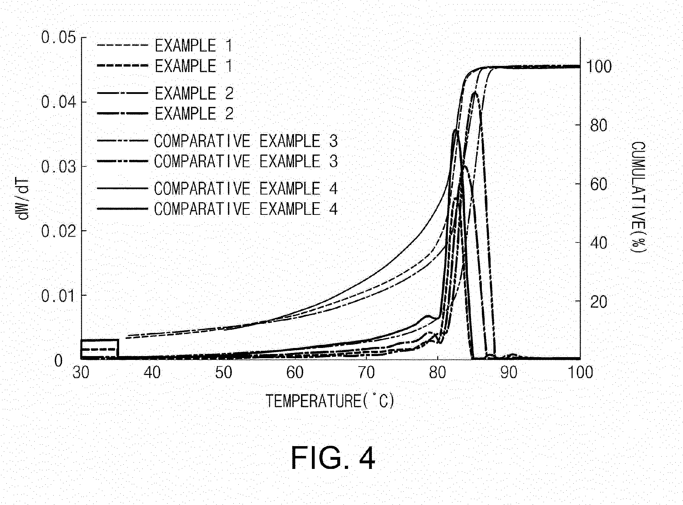

FIG. 4 is a crystallization analysis fractionation (CRYSTAF) graph of Examples 1 and 2 and Comparative Examples 3 and 4.

DETAILED DESCRIPTION

Hereinafter, embodiments will be described in detail, and may be readily performed by those who have common knowledge in the related art. However, embodiments may be embodied in many different forms and should not be construed as limited to the embodiments set forth herein.

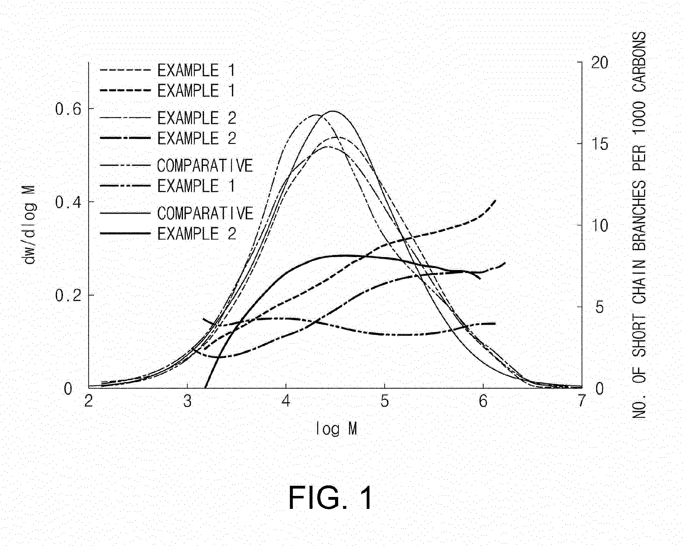

An embodiment provides a polyethylene resin in which, with respect to a total integrated area of a total molecular weight (M) distribution graph of the polyethylene resin measured by gel permeation chromatography - infrared, an integrated area of the graph corresponding to a polymer having a molecular weight (M) of 10$^5$ g/mol to 10$^6$ g/mol is 18% to 28%, and in this case, the number of short chain branches per 1000 carbons of the polymer is 5 or greater and less than 15, an integrated area of the graph corresponding to a polymer having a molecular weight (M) of 10$^3$ g/mol to 10$^4$ g/mol is 20% to 30%, and in this case the number of short chain branches (SCBs) per 1000 carbons of the polymer is 1 or greater and less than 8, and the molecular weight (M) is a molecular weight of a polymer passing through a column in the gel permeation chromatography - infrared. This may be understood by referring to the graph in FIG. 1 as an example.

The polyethylene resin includes a polymer having a molecular weight of 10$^5$ g/mol to 10$^6$ g/mol and a polymer having a molecular weight of 10$^3$ g/mol to 10$^4$ g/mol. Also, with respect to a total integrated area of a total molecular weight distribution graph of the polyethylene resin measured by gel permeation chromatography - infrared, an integrated area of the graph corresponding to the polymer having a molecular weight of 10$^5$ g/mol to 10$^6$ g/mol is 18% to 28%, and an integrated area of the graph corresponding to the polymer having a molecular weight of 10$^3$ g/mol to 10$^4$ g/mol is 20% to 30%.

With respect to a total integrated area of a total molecular weight distribution graph of the polyethylene resin measured by gel permeation chromatography - infrared, an integrated area of the graph corresponding to the polymer having a molecular weight of 10$^5$ g/mol to 10$^6$ g/mol may be 18% to 28%, and in this case, the number of short chain branches per 1000 carbons of the polymer may be 5 or greater and less than 15, and for example, an integrated area of the graph corresponding to the polymer having a molecular weight of 10$^5$ g/mol to 10$^6$ g/mol may be 20% to 23%, and in this case, the number of short chain branches per 1000 carbons of the polymer may be 6 or greater and less than 12.

In addition, with respect to a total integrated area of a total molecular weight distribution graph of the polyethylene resin measured by gel permeation chromatography - infrared, an integrated area of the graph corresponding to the polymer having a molecular weight of 10$^3$ g/mol to 10$^4$ g/mol may be 20% to 30%, and in this case, the number of short chain branches per 1000 carbons of the polymer may be 1 or greater and less than 8, and for example, an integrated area of the graph corresponding to the polymer having a molecular weight of $10^3$ g/mol to $10^4$ g/mol may be 22% to 26%, and in this case, the number of short chain branches per 1000 carbons of the polymer may be 1.5 or greater and less than 6.

In addition, the short chain branch may have a broad orthogonal comonomer distribution (BOCD) structure that increases with an increase in molecular weight. The BOCD structure may be a structure that contains a great deal of monomers and has a wide molecular weight distribution, and the short chain branch may have the BOCD structure that increases with an increase in molecular weight.

In the case that the molecular weight of the polymer and the number of short chain branches that form the polyethylene resin are within the above range and the short chain branches have a BOCD profile, when a final film prepared from the polyethylene resin is sequentially biaxially stretched through a tenter-frame process, stable sequential biaxial stretching is achievable and the stretching ratio may be improved, and accordingly, the stretched film may have significantly improved mechanical strength and thermal stability.

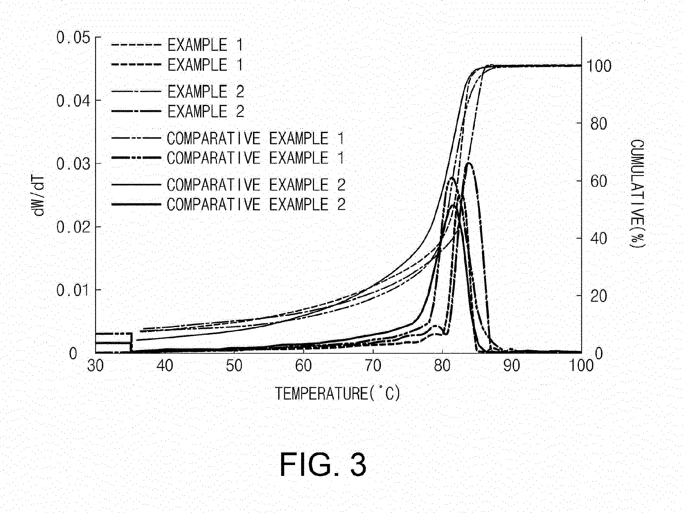

In the polyethylene resin, a fraction eluting at a temperature of 70 °C to 80 °C may be 10% or greater and less than 20%, for example, 12% or greater and less than 18%, 14% or greater and less than 17%, from the results of crystallization analysis fractionation (CRYSTAF). In addition, in the polyethylene resin, a fraction eluting at a temperature of 80 °C to 90 °C may be 50% or greater and less than 70%, for example, 55% or greater and less than 68%, 60% or greater and less than 65%, from the results of crystallization analysis fractionation (CRYSTAF). FIG. 3 shows a crystallization analysis fractionation (CRYSTAF) graph of Examples 1 and 2 and Comparative Examples 1 and 2. Referring to FIG. 3, the fraction eluting at a temperature of 70 °C to 80 °C refers to a value obtained by subtracting the accumulation (%) at 70 °C from the accumulation (%) at 80 °C in each dotted line graph of Examples 1 and 2. In addition, the fraction eluting at a temperature of 80 °C to 90 °C refers to a value obtained by subtracting the accumulation (%) at 80 °C from the accumulation (%) at 90 °C in each dotted line graph of Examples 1 and 2. In the case that in the polyethylene resin according to an embodiment, a high-density polymer portion that is highly crystalline and eluting at 70 °C or higher is present in the above range at the above temperature, when a final film prepared from the polyethylene resin is sequentially biaxially stretched through a tenter-frame process, elongation in the machine direction (MD) and transverse direction (TD) may be increased and also a stretched film having high thermal stability and mechanical strength may be obtained.

The polyethylene resin may have a density of 0.945 g/cm$^3$ to 0.970 g/cm$^3$, for example, 0.945 g/cm$^3$ to 0.965 g/cm$^3$, 0.945 g/cm$^3$ to 0.955 g/cm$^3$. When the density of the polyethylene resin is in the above range, the final film may have excellent thermal stability, low thermal shrinkage, and improved mechanical strength as well.

The polyethylene resin may have a melt index $MI_{2.16kg}$ (a load of 2.16 kg, 190 °C) of 0.40 g/10 min to 3.0 g/10 min, for example, 0.45 g/10 min to 1.5 g/10 min, 0.45 g/10 min to 1.2 g/10 min. When the melt index of the polyethylene resin is in the above range, upon film preparation, extrusion processability may be excellent and deterioration in physical properties due to low molecular weight portions may be prevented.

The polyethylene resin may have a melt flow rate ratio ($MI_{21.6kg}$ (a load of 21.6 kg, 190 °C)/ $MI_{2.16kg}$ (a load of 2.16 kg, 190 °C)) of 70 to 90, for example, 80 to 90. When the melt flow rate ratio (MFRR) of the polyethylene resin is in the above range, upon film preparation, extrusion processability may be excellent, the film may be stably stretched sequentially and biaxially in the machine direction (MD) and transverse direction (TD), and the stretching ratio may be improved.

Another embodiment provides a method for preparing a polyethylene resin that includes injecting a monomer, a catalyst, and a C5 to C20 olefin comonomer into a first reactor; injecting the comonomer into the first reactor at a ratio of 60 g/kg to 95 g/kg relative to ethylene; injecting hydrogen into the first reactor; and injecting a polymer polymerized in the first reactor into a second reactor.

The polyethylene resin according to an embodiment may be formed through polymerization using a two-stage reactor consisting of a first reactor and a second reactor, which are connected to each other. To be specific, a polyethylene resin may be primarily formed through polymerization in the first reactor, and the resulting polyethylene resin may be transferred to the second reactor and continuously polymerized to form a polyethylene resin secondarily. The first reactor and the second reactor may be a slurry process in the form of a continuous stirred tank reactor.

The polymerization in the first reactor and the second reactor may be performed in the presence of a Ziegler-Natta catalyst, a metallocene catalyst, or a combination thereof, for example, the Ziegler-Natta catalyst. The Ziegler-Natta catalyst is a catalyst known as a typical Ziegler-Natta catalyst and uses a transition metal compound from Group IV, Group V, or Group VI of the periodic table of elements as a main catalyst, and in particular, the most widely used Ziegler-Natta catalyst is a halogenated complex composed of magnesium and titanium or magnesium and vanadium. In addition, the metallocene catalyst is a catalyst known as a typical metallocene catalyst and uses a transition metal compound from Group IV or Group V of the periodic table of elements as a main catalyst, and in particular, the most widely used metallocene catalyst is composed of titanium, zirconium, or hafnium and methyl aluminum oxane or borane & borate.

In addition, a comonomer may be added during the polymerization in the first reactor and the second reactor. As the comonomer, an α-olefin of C5 to C20, for example, C5 to C10, or C6 to C8 may be used, and for example, 1-hexene may be used.

In the preparation of the polyethylene resin according to an embodiment, the comonomer may be injected into the first reactor at a ratio of 60 g/kg to 100 g/kg relative to ethylene, for example, 63 g/kg to 95 g/kg, 65 g/kg to 92 g/kg.

In the case of a polyethylene resin prepared by injecting the comonomer in the above ratio range in the presence of the catalyst, through the tenter-frame process, a polyethylene resin providing high biaxial elongation upon stretching, having excellent processability upon stretching, and having a wide temperature range for stretching may be providable, and accordingly, a final film having improved transparency, improved mechanical strength, and excellent thermal stability may be obtained.

Other than the polyethylene resin, the polyethylene resin according to an embodiment may further include an additive including an antioxidant, a neutralizing agent, or a combination thereof.

The additive may be included in an amount of 0.005 parts by weight to 0.5 parts by weight with respect to 100 parts by weight of the polyethylene resin.

The antioxidant may include a phenol-based compound, a phosphorus-based compound, or a combination thereof. The phenol-based compound may be pentaerythritol tetrakis (3-(3,5-ditetrabutyl-4-hydroxyphenyl) propionate), octadecyl (3-(3,5-ditetrabutyl-4-hydroxy phenyl)propionate), tris(3,4-ditetrabutyl-4-hydroxylbenzyl)isocyanate, triethylene glycol-bis(3-(tetrabutyl-4-hydroxy-5-methylphenyl)propionate), and the like, and the phosphorus-based compound may be tris(2,4-ditetrabutylphenyl)phosphite, tetrakis(2,4-di-tert-butylphenyl)-4,4-diphenyl diphosphonate, distearyl pentaerythritol diphosphite, 2,4-dinonylphenyl di(4-monononylphenyl)phosphite, and the like.

The antioxidant may be included in an amount of 0.01 parts by weight to 0.5 parts by weight, for example, 0.1 parts by weight to 0.3 parts by weight, with respect to 100 parts by weight of the polyethylene resin. When the antioxidant is included in the above content range, excellent processability may be obtained without discoloration or changes in viscosity.

The neutralizing agent may include calcium stearic acid, zinc stearic acid, magnesium aluminum hydroxy carbonate, zinc oxide, magnesium hydroxy stearic acid, or a combination thereof.

The neutralizing agent may be included in an amount of 0.005 parts by weight to 0.3 parts by weight, for example, 0.02 parts by weight to 0.1 parts by weight, with respect to 100 parts by weight of the polyethylene resin. When the neutralizing agent is included in the above content range, excellent processability may be obtained without discoloration or changes in viscosity.

Another embodiment provides a molded article including the polyethylene resin.

The molded article may be a film sequentially biaxially stretched to have a machine direction (MD) elongation of 4 to 6 times and a transverse direction (TD) elongation of 8 to 10 times through a tenter-frame process.

Hereinafter, specific examples of the present invention are presented. However, the following examples are merely used to illustrate or describe the present invention in more detail, and are not to be seen as limiting the present invention. Furthermore, what is not described herein may be sufficiently understood by those skilled in the art who have knowledge in this field, and thus are omitted.

**(Preparation of polyethylene resin)**

**Example 1**

Two reactors (each with a capacity of 90 liters) were connected in series to prepare ethylene polymerization using a Ziegler-Natta catalyst and a comonomer. The Ziegler-Natta catalyst was a known catalyst composed of magnesium and titanium and prepared through a typical method.

To be specific, a slurry polymer polymerized in the first reactor was transferred to the second reactor to continue polymerization, and a ratio of polymerization amount in each reactor was set at a weight ratio of 51:49. In this case, in the first reactor, as a comonomer, 1-hexene was provided at a feed ratio of 90 g/kg compared to $C_2$, and $H_2$ was provided at a feed ratio of 31 mg/kg compared to $C_2$. In addition, during the polymerization of polyethylene resin in the second reactor, as a comonomer, 1-hexene was provided at a feed ratio of 10 g/kg compared to $C_2$, and $H_2$ was provided at a feed ratio of 0.52 mol%/wt% compared to $C_2$. The polymerization in the first reactor was performed at a temperature of 85 °C, at a pressure of 45 kgf/cm$^2$, and at a residence time of 61 min., and the polymerization in the second reactor was performed at a temperature of 94 °C, at a pressure of 45 kgf/cm$^2$, and at a residence time of 34 min. Process conditions in each of the first reactor and the second reactor are shown in Table 1 below.

0.1 part by weight of Irganox-3114 and 0.1 part by weight of Irgafos-168 as antioxidants, and 0.025 parts by weight of magnesium aluminum hydroxyl carbonate (DHT-4A) as a neutralizing agent were mixed with 100 parts by weight of the powder-type polyethylene resin obtained above using a Henschel mixer, and then prepare a polyethylene resin composition in the form of a pellet, using a twin-screw extruder.

### Example 2

A polyethylene resin composition was prepared in the same manner as in Example 1 according to the composition in Table 1 below.

A slurry polymer polymerized in the first reactor was transferred to the second reactor to continue polymerization, and a ratio of polymerization amount in each reactor was set at a weight ratio of 47:53. In this case, in the first reactor, as a comonomer, 1-hexene was provided at a feed ratio of 68 g/kg compared to $C_2$, and $H_2$ was provided at a feed ratio of 38 mg/kg compared to $C_2$, and in the second reactor, upon the polyethylene resin polymerization, a comonomer was not provided and $H_2$ was provided at a feed ratio of 0.60 mol%/wt% compared to $C_2$.

### Comparative Example 1

A polyethylene resin composition was prepared in the same manner as in Example 1 according to the composition in Table 1 below.

A slurry polymer polymerized in the first reactor was transferred to the second reactor to continue polymerization, and a ratio of polymerization amount in each reactor was set at a weight ratio of 49:51.

In this case, in the first reactor, as a comonomer, 1-butene was provided at a feed ratio of 20 g/kg compared to $C_2$, and $H_2$ was provided at a feed ratio of 35 mg/kg compared to $C_2$, and in the second reactor, upon the polyethylene resin polymerization, as a comonomer, 1-butene was provided at a feed ratio of 85 g/kg compared to $C_2$, and $H_2$ was provided at a feed ratio of 0.54 mol%/wt% compared to $C_2$.

### Comparative Example 2

A polyethylene resin composition was prepared in the same manner as in Example 1 according to the composition in Table 1 below.

A slurry polymer polymerized in the first reactor was transferred to the second reactor to continue polymerization, and a ratio of polymerization amount in each reactor was set at a weight ratio of 50:50. In this case, in the first reactor, as a comonomer, 1-hexene was provided at a feed ratio of 33 g/kg compared to $C_2$, and $H_2$ was provided at a feed ratio of 50 mg/kg compared to $C_2$, and in the second reactor, upon the polyethylene resin polymerization, as a comonomer, 1-hexene was provided at a feed ratio of 19 g/kg compared to $C_2$, and $H_2$ was provided at a feed ratio of 0.45 mol%/wt% compared to $C_2$.

### Comparative Example 3

A polyethylene resin composition was prepared in the same manner as in Example 1 according to the composition in Table 1 below.

A slurry polymer polymerized in the first reactor was transferred to the second reactor to continue polymerization, and a ratio of polymerization amount in each reactor was set at a weight ratio of 50:50. In this case, in the first reactor, as a comonomer, 1-hexene was provided at a feed ratio of 13 g/kg compared to $C_2$, and $H_2$ was provided at a feed ratio of 150 mg/kg compared to $C_2$, and in the second reactor, upon the polyethylene resin polymerization, as a comonomer, 1-butene was provided at a feed ratio of 25 g/kg compared to $C_2$, and $H_2$ was provided at a feed ratio of 0.18 mol%/wt% compared to $C_2$.

### Comparative Example 4

A polyethylene resin composition was prepared in the same manner as in Example 1 according to the composition in Table 1 below.

A slurry polymer polymerized in the first reactor was transferred to the second reactor to continue polymerization, and a ratio of polymerization amount in each reactor was set at a weight ratio of 53:47. In this case, in the first reactor, as a comonomer, 1-butene was provided at a feed ratio of 72 g/kg compared to $C_2$, and $H_2$ was provided at a feed ratio of 35 mg/kg compared to $C_2$, and in the second reactor, upon the polyethylene resin polymerization, a comonomer was not provided and $H_2$ was provided at a feed ratio of 0.50 mol%/wt% compared to $C_2$.

[Table 1]

| | Example 1 | Example 2 | Comparative Example 1 | Comparative Example 2 | Comparative Example 3 | Comparative Example 4 |
|---|---|---|---|---|---|---|
| Catalyst | Ziegler-Natta | Ziegler-Natta | Ziegler-Natta | Metallocene | Ziegler-Natta | Ziegler-Natta |
| Comonomer | 1-hexene | 1-hexene | 1-butene | 1-hexene | 1-butene | 1 -butene |
| Polymerization amount ratio (%) in first reactor | 51 | 47 | 49 | 50 | 50 | 53 |
| Feed ratio of comonomer in first reactor (g/kg_$C_2$) | 90 | 68 | 20 | 33 | 13 | 72 |
| Feed ratio of comonomer in second reactor (g/kg_$C_2$) | 10 | - | 85 | 19 | 25 | - |
| Feed ratio of hydrogen in first reactor (g/kg_$C_2$) | 31 | 38 | 35 | 50 | 150 | 35 |
| Feed ratio of hydrogen in second reactor (mol%/wt%) | 0.52 | 0.60 | 0.54 | 0.45 | 0.18 | 0.50 |

**Evaluation** 1: **Measurement of properties of polyethylene resin**

The following properties were measured for polyethylene resins prepared in Examples 1 and 2 and Comparative Examples 1 to 4, and the results are shown in Table 2 below.

Density

Density was measured in accordance with ASTM D1505.

Melt index (MI)

Melt index was measured at a load of 2.16 kg, a load of 5 kg and a load of 21.6 kg at 190 °C in according with ASTM D1238.
The melt index measured at a load of 2.16 kg was shown as $MI_2$, the melt index measured at a load of 5 kg was shown as $MI_5$, and the melt index measured at a load of 21.6 kg was shown as HLMI.

Melting temperature (Tm) and crystallization temperature (Tc)

Using differential scanning calorimetry (DSC), measurement was performed at a heating rate of 10 °C/min in accordance with ASTM D 3418.

Gel permeation chromatography - infrared (GPC-IR)

Polymer Char GPC-IR® equipment was used. 12 mg of sample was prepared by adding 8 ml of 1,2,4-trichlorobenzene (containing 125 ppm BHT) and dissolving a mixture at 160 °C for 2 hours. 1,2,4-trichlorobenzene (containing 125 ppm BHT) was used as an eluent, and one Olexis guard and three Olexis (Column; PLgel Olexis guard X 1 + PLgel Olexis X 3) were connected and used as a column, and 200 ul was injected and analyzed. In terms of column calibration for molecular weight calculation, polystyrene standard materials were used, and Mark-Houwink constant (K = 44.6, a = 0.725) was applied to calculate the molecular weight of polyethylene.
The number of short chain branches in the sample indicates the number of short chain branches per 1000 carbons, and was calibrated using a standard (1-octene copolymer provided by Polymer Char) whose value is already known. As an average value of the number of methyl groups excluding methyl groups at chain ends from the number of methyl groups (-$CH_3$) present per 1000 carbons in the sample, it indicates a value calculated through end chain correction from methyl groups present per 1000 carbons (CH$_3$/1000TC) in the sample. The end chain correction is determined by the following equation.

$$\text{No. of chain ends}/1000\text{TC} = (A \times 14{,}000) / M$$

A: Number of end groups (2 for linear PE, >2 for long chain branch (LCB) polymer)
M: Given molar mass

When the chain end group ends with a vinyl group (-CH=CH$_2$), the value was applied to end chain correction as 0.
FIG. 1 is a graph showing the total molecular weight distribution of the polyethylene resins of Examples 1 and 2 and the number of short chain branches per 1000 carbons as measured by gel permeation chromatography - infrared (GPC-IR). Referring to FIG. 1, it is seen that in the graph of overall molecular weight distribution of Examples 1 and 2, integrated areas of the portions having logM values of 3 to 4 and 5 to 6 each correspond to a proportion of polymers having a molecular weight (M) of 10$^5$ g/mol to 10$^6$ g/mol and a proportion of polymers having a molecular weight (M) of 10$^3$ g/mol to 10$^4$ g/mol.

Crystallization Analysis Fractionation (CRYSTAF)

It was measured using the equipment of CRYSTAF from Polymer Char. 20 mg of sample was added to 20 ml of 1,2,4-trichlorobenzene and stirred and dissolved at 160 °C for 60 minutes. The equipment was injected into the solution and then stabilized at 100 °C for 45 minutes, and then while the temperature was lowered to 35 °C at a constant rate of 0.2 °C/min, a crystallized portion was filtered through a filter, and the concentration of polymer dissolved in the solution was measured. As for the cumulative curve, the concentration of an initial set temperature was set to 100% and the concentration of a polymer solution that decreases with temperature is given in %.

[Table 2]

| | Example 1 | Example 2 | Comparative Example 1 | Comparative Example 2 | Comparative Example 3 | Comparative Example 4 |
|---|---|---|---|---|---|---|
| Density (g/cm$^3$) | 0.948 | 0.952 | 0.950 | 0.946 | 0.959 | 0.952 |
| Melt index (MI$_2$) (g/10min) | 0.49 | 1.04 | 1.223 | 0.68 | 0.842 | 0.578 |
| Melt flow rate ratio (MFRR, HLMI/MI$_2$) | 88 | 84 | 99 | 78 | 59 | 92 |
| Melting temperature (°C) | 128 | 130 | 128 | 126 | 132 | 128 |
| Crystallization temperature (°C) | 116 | 118 | 117 | 116 | 120 | 117 |
| Proportion (%) of polymer having molecular weight (M) of 10$^5$ to 10$^6$ | 22.8 | 20.7 | 18.6 | 16.2 | 17.6 | 17.5 |
| Proportion (%) of polymer having molecular weight (M) of 10$^3$ to 10$^4$ | 23.2 | 25.7 | 26.8 | 25 | 22.7 | 32.8 |

(continued)

|  | | Example 1 | Example 2 | Comparative Example 1 | Comparative Example 2 | Comparative Example 3 | Comparative Example 4 |
|---|---|---|---|---|---|---|---|
| No. of short chain branches in polymer having molecular weight (M) of $10^5$ to $10^6$ | | 8.7 ~ 10.6 | 6.5 ~ 7.2 | 3.2 ~ 4.0 | 6.8 ~ 8.0 | 5.1 ~ 5.9 | 10.0 ~ 10.6 |
| No. of short chain branches in polymer having molecular weight (M) of $10^3$ to $10^4$ | | 2.5 ~ 5.3 | 1.8 ~ 3.2 | 3.9 ~ 4.3 | 0.2 ~ 7.0 | 1.6 ~ 4.2 | 0.1 ~ 5.5 |
| Crystalli zation Analysis Fraction ation | > 30 °C to 70 °C (%) | 23.3 | 21.4 | 18.9 | 22.9 | 5.6 | 27.2 |
| | 70 °C to 80 °C (%) | 15.9 | 15.0 | 21.2 | 28.5 | 6.9 | 23.7 |
| | 80 °C to 90 °C (%) | 60.6 | 63.3 | 59.7 | 48.4 | 87.1 | 48.9 |
| | 90 °C to 100 °C (%) | 0.2 | 0.3 | 0.2 | 0.2 | 0.4 | 0.2 |

Evaluation 2: Evaluation of biaxial stretching properties

To evaluate the biaxial stretching properties using the polyethylene resin compositions prepared in Examples 1 to 2 and Comparative Examples 1 to 4, a sheet having a width of 500 mm and a thickness of 800 $\mu$m was prepared at 230 °C using Korean EM multilayer calendaring sheet equipment (die lip: 500 mm, die gap: 1.5 mm). A square specimen having a size of 80 mm x 80 mm was cut from the middle portion of the extruded sheet, and biaxial stretching was performed at a stretching speed of 100 %/s with respect to an original specimen using a PS01 biaxial stretcher manufactured by SDB Co., Ltd. The warm-up time before stretching was fixed at 240 seconds, and the stretching was performed sequentially. In sequential biaxial stretching, the specimen was first stretched up to 6 times in the machine direction (MD), and secondly stretched up to 9 times in the transverse direction (TD). This is shown in Table 3 below, and the case where stretching is available is given as O, and the case where stretching is not available is given as X.

[Table 3]

| | Example 1 | Example 2 | Comparative Example 1 | Comparative Example 2 | Comparative Example 3 | Comparative Example 4 |
|---|---|---|---|---|---|---|
| Stretching ratio | 6X9 Sequential stretching | 6X9 Sequential stretching | 5X8 Sequential stretching | 3X3 Sequential stretching | 3X3 Sequential stretching | 4X7 Sequential stretching |
| 120 °C | X (broken) | X (broken) | X (broken) | X | X | X |
| 121 °C | O | X | X | X | X | X |
| 122 °C | O | X | X | X (melted) | X | X |
| 123 °C | O | X | O | X | X | X |
| 124 °C | O | O | O | X | X | O |
| 125 °C | X (melted) | O | O | X | X | O |
| 126 °C | X | O | X (melted) | X | X | O |
| 127 °C | X | O | X | X | X | X (melted) |
| 128 °C | X | O | X | X | X | X |
| 129 °C | X | O | X | X | X | X |
| 130 °C | X | X (melted) | X | X | X | X |

Referring to Table 3 above, it is seen that when the polyethylene resins of Examples 1 and 2 were used, sequential biaxial stretching was easily available up to 6 times in the machine direction and 9 times in the transverse direction. In addition, it is seen that stretching processing was available over a wide temperature range of 121 °C to 129 °C for stretching.

Accordingly, it is seen that the polyethylene resin according to an embodiment provides high biaxial elongation upon stretching through the tenter-frame process, has excellent processability upon stretching, and has a wide temperature range for stretching.

**Evaluation 3: Manufacture of biaxially stretched film and measuring film property**

Biaxial stretching evaluation was conducted on the Bruckner pilot dedicated line (hybrid BOPE/BOPP line, 5-layer, 1 m in width) using the sheet of Example 2 prepared in Evaluation 2. The film was constructed by applying the sheet of Example 2 to all 5 layers, and the extrusion speed was 25 m/min. At a die temperature of 250 °C, a film that was finally stretched 5.6 times in the machine direction (MD) and 8 times in the transverse direction (TD) was successfully secured, indicating excellent stretching properties. Extrusion conditions and stretching conditions are each shown in Tables 4 and 5. The physical properties of the biaxially stretched film according to Example 2 prepared above were measured in the following manner, and the results are shown in Table 6 below.

Tensile strength, elongation, and modulus

Each was measured in accordance with ASTM D 882.

Haze

It was measured in accordance with ASTM D 1003.

Thermal shrinkage

A film (machine direction (MD) x transverse direction(TD) = 10 cm x 10 cm) was left in an oven at 100 °C for 5 minutes, and then the change in length was measured.

[Table 4]

| | Main extrusion (Twin screw) | Co-EX 1 | Co-Ex 2 | Co-Ex 3 | Co-Ex 4 |
|---|---|---|---|---|---|
| | set (°C) | set (°C) | set (°C) | set (°C) | set (°C) |
| Zone 1 | 70 | 75 | 230 | 230 | 230 |
| Zone 2 | 200 | 190 | 240 | 240 | 240 |
| Zone 3 | 220 | 200 | 240 | 240 | 240 |
| Zone 4 | 210 | 200 | 240 | | |
| Zone 5 | 225 | 215 | | | |
| Zone 6 | 210 | 200 | | | |
| Zone 7 | 230 | 210 | | | |
| Flange | 240 | 230 | | | |
| Melt Temp' | 241 | 236 | 249 | 256 | 257 |

[Table 5]

| Casting Unit | | |
|---|---|---|
| Chill Roll - temperature | °C | 70 |
| Chill Roll - speed | m/min | 5 |
| MDO - temperature | | |
| Preheating 1 | | |
| Preheating 2 | °C | 80 |
| Preheating 3 | °C | 75 |
| Preheating 4 | °C | 112 |
| Preheating 5 | °C | 114 |
| Preheating 6 | °C | 116 |
| Drawing 1 | °C | 120 |
| Drawing 2 | °C | 120 |
| Drawing 3 | °C | 110 |
| Drawing 4 | °C | 100 |
| Annealing 1 | °C | 100 |
| Annealing 2 | °C | 100 |
| MDO - stretching | | |
| Ratio gap 1 | [-] | 2.0 |
| Ratio gap 2 | [-] | 2.8 |
| Ratio gap 3 | [-] | 1.0 |
| Ratio Total | [-] | 5.6 |
| TDO - temperature | | |
| Zone 1.1 Top | °C | 156 |
| Zone 1.2 Bottom | °C | 156 |
| Zone 2.1 Top | °C | 154 |
| Zone 2.2 Bottom | °C | 154 |

(continued)

| TDO - temperature | | |
|---|---|---|
| Zone 3.1 Top | °C | 150 |
| Zone 3.2 Bottom | °C | 150 |
| Zone 3.3 Top | °C | 148 |
| Zone 3.4 Bottom | °C | 148 |
| Zone 4.1 Top | °C | 146 |
| Zone 4.2 Bottom | °C | 146 |
| Zone 4.3 Top | °C | 144 |
| Zone 4.4 Bottom | °C | 144 |
| Zone 5.1 Top | °C | 120 |
| Zone 5.2 Bottom | °C | 120 |
| Zone 5.3 Top | °C | 118 |
| Zone 5.4 Bottom | °C | 118 |
| Zone 6.1 Top | °C | 120 |
| Zone 6.2 Bottom | °C | 120 |
| Zone 6.3 Top | °C | 120 |
| Zone 6.4 Bottom | °C | 120 |
| Zone 7.1 Top | °C | 120 |
| Zone 7.2 Bottom | °C | 120 |
| Zone 7.3 Top | °C | 120 |
| Zone 7.4 Bottom | °C | 120 |
| Zone 8.1 Top | °C | 135 |
| Zone 8.2 Bottom | °C | 135 |
| Zone 9.1 Top | °C | 100 |
| Zone 9.2 Bottom | °C | 100 |
| Zone 9.3 Top | °C | 90 |
| Zone 9.4 Bottom | °C | 90 |
| TDx - stretching | | |
| Maximum Ratio | [-] | 5.9 |
| Outlet Ratio | [-] | 5.3 |
| Relax [%] | [-] | 10.2 |
| Inlet Width | [-] | 260 |

[Table 6]

| | Example 2 |
|---|---|
| Stretching ratio | 5.6 X 8 |
| Average thickness ($\mu$m) | 24 |
| Tensile strength (MPa) in machine direction (MD) | 127 |

(continued)

| | Example 2 |
|---|---|
| Tensile strength (MPa) in transverse direction (TD) | 141 |
| Elongation (%) in machine direction (MD) | 120 |
| Elongation (%) in transverse direction (TD) | 60 |
| 1% secant modulus in machine direction (MD) | 1401 |
| 1 % secant modulus in transverse direction (TD) | 1587 |
| Haze (%) | 47 |
| Thermal shrinkage (%) in machine direction (MD) | 1.17 |
| Thermal shrinkage (%) in transverse direction (TD) | 1.93 |

Referring to Table 6 above, the film sequentially biaxially stretched 5.6 times in the machine direction and 8 times in the transverse direction using the polyethylene resin composition of Example 2 showed high tensile strength and modulus in the machine and transverse directions, and showed low haze and low thermal shrinkage in the machine and transverse directions.

Accordingly, it is seen that when a final film made of the polyethylene resin according to an embodiment is sequentially biaxially stretched at high elongation through a tenter-frame process, the stretched film has improved mechanical strength and transparency and excellent thermal stability.

Although preferred embodiments of the present invention have been described above, the present invention is not limited thereto and may be embodied by being modified in various ways within the scope of the claims, the detailed description, and the accompanying drawings. Such modifications belong to the scope of the present invention.

A polyethylene resin according to an embodiment provides high biaxial elongation upon stretching through a tenter-frame process, has excellent processability upon stretching, and has a wide temperature range for stretching. Accordingly, a final film having improved mechanical strength and excellent thermal stability is obtained.

## Claims

1. A polyethylene resin in which, with respect to a total integrated area of a total molecular weight (M) distribution graph of the polyethylene resin measured by gel permeation chromatography - infrared,

   an integrated area of the graph corresponding to a polymer having a molecular weight (M) of $10^5$ g/mol to $10^6$ g/mol is 18% to 28%, wherein the number of short chain branches per 1000 carbons of the polymer is 5 or greater and less than 15;
   an integrated area of the graph corresponding to a polymer having a molecular weight (M) of $10^3$ g/mol to $10^4$ g/mol is 20% to 30%, wherein the number of short chain branches per 1000 carbons of the polymer is 1 or greater and less than 8; and
   the molecular weight (M) is a molecular weight of a polymer passing through a column in the gel permeation chromatography - infrared.

2. The polyethylene resin of claim 1, wherein the short chain branch has a broad orthogonal comonomer distribution (BOCD) structure.

3. The polyethylene resin of claim 1, wherein in the polyethylene resin, a fraction eluting at a temperature of 70 °C to 80 °C is 10% or greater and less than 20%, and a fraction eluting at a temperature of 80 °C to 90 °C is 50% or greater and less than 70% from the results of crystallization analysis fractionation.

4. The polyethylene resin of claim 1, wherein the polyethylene resin has a density of 0.945 $g/cm^3$ to 0.970 $g/cm^3$.

5. The polyethylene resin of claim 1, wherein the polyethylene resin has a melt index $MI_{2.16kg}$ (a load of 2.16 kg, 190 °C) of 0.40 g/10 min to 3.0 g/10 min.

6. The polyethylene resin of claim 1, wherein the polyethylene resin has a melt flow rate ratio ($MI_{21.6kg}$ (a load of 21.6 kg, 190 °C)/MI$_{2.16kg}$ (a load of 2.16 kg, 190 °C)) of 70 to 90.

7.  A method for preparing a polyethylene resin, the method comprising:

    injecting a monomer, a catalyst, and a C5 to C20 olefin comonomer into a first reactor;
    injecting the comonomer into the first reactor at a ratio of 60 g/kg to 100 g/kg relative to ethylene;
    injecting hydrogen into the first reactor; and
    injecting a polymer polymerized in the first reactor into a second reactor.

8.  A molded article comprising the polyethylene resin of any one of claims 1 to 6.

9.  The molded article of claim 8, wherein the molded article is a film sequentially biaxially stretched to have a machine direction (MD) elongation of 4 to 6 times and a transverse direction (TD) elongation of 8 to 10 times through a tenter-frame process.

FIG. 1

FIG. 2

FIG. 3

FIG. 4